# EUROPÄISCHE PATENTSCHRIFT

(11) **EP 0 999 255 B1**
(45) Veröffentlichungstag und Bekanntmachung des Hinweises auf die Patenterteilung: **07.01.2004**
(21) Anmeldenummer: 99203543.6
(22) Anmeldetag: 27.10.1999
(51) Int. Cl.: C09K 11/02, H01J 17/49

(54) **Plasmabildschirm mit oxidhaltiger Leuchtstoffzubereitung**
Plasma display panel with oxide-containing phosphor manufacturing
Panneau de visualisation à plasma avec préparation de produit luminescent contenant des oxydes

(30) Priorität: 06.11.1998 DE 19851348
(43) Veröffentlichungstag der Anmeldung: 10.05.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Jüstel, Thomas, Philips Corp. Intel. Prop. GmbH, 52064 Aachen (DE); Nikol, Hans, Philips Corp. Intel. Prop. GmbH, 52064 Aachen (DE); Merikhi, Jacqueline, Philips Corp. Int. Prop. GmbH, 52064 Aachen (DE)
(74) Vertreter: Volmer, Georg, Dipl.-Ing.

(56) Entgegenhaltungen:
- EP-A- 0 638 625
- DE-A- 19 626 219
- DATABASE WPI Section Ch, Week 197713 Derwent Publications Ltd., London, GB; Class L03, AN 1977-22941Y XP002153210 & JP 52 022580 A (FUJITSU LTD), 19. Februar 1977 (1977-02-19)
- DATABASE WPI Section Ch, Week 197713 Derwent Publications Ltd., London, GB; Class L03, AN 1977-22942Y XP002153211 & JP 52 022581 A (FUJITSU LTD), 19. Februar 1977 (1977-02-19)

## Beschreibung

Die Erfindung betrifft ein Verfahren zur Herstellung einer Leuchtstoffzubereitung, insbesondere einer Leuchtstoffzubereitung für einen Plasmabildschirm, aus einem Leuchtstoff mit einer Leuchtstoffbeschichtung mit mindestens einer Schicht, die Magnesiumoxid MgO enthält.

Ein Plasmabildschirm besteht üblicherweise aus zwei parallelen Glassubstraten, auf denen jeweils Elektroden-Arrays sitzen: Horizontale Scan- und Sustainelektroden auf der vorderen, vertikale Dataelektroden auf der hinteren Scheibe. Elektrische Spannung an bestimmten Reihen- oder Zeilenelektroden sorgt für punktgenaue Entladungen eines eingeschlossenen Gases, dadurch wird Plasma aufgebaut. Die Entladungsplätze zwischen den Scheiben, ausschlaggebend für einzelne Pixel, sind durch eine Rippenstruktur voneinander getrennt. In den durch die Rippen gebildeten Zellen liegen die Leuchtstoffpunkte.

Das Plasma emittiert ultraviolette Photonen, die wiederum die Leuchtstoffe exakt an der gewünschten Stelle im Gitternetz der Elektroden zum Aussenden roten, grünen oder blauen Lichts zwingen.

Die lichtemittierenden Entladungen sind dielektrisch behinderte Entladungen und dauern nur wenige Nanosekunden. Für die zeitliche Begrenzung sind dünne dielektrische Schichten, die auf beide Elektroden-Arrays aufgetragen werden, zuständig. Sie stoppen die entstehenden Gasionen an der Kathode und die Elektronen an der Anode.

Ältere Plasmabildschirme arbeiteten mit Gleichspannung von etwa 360 V. Hierbei steuern die Elektroden direkt das Plasma an, die Signale haben eine sehr einfache Form, aber die Lebensdauer solcher Displays war nicht sehr hoch, da die Elektroden und Leuchtstoffe ständig einem Ionenbombardment ausgesetzt waren. Bei Wechscispannungsbctrieb sind die Elektroden mit einer nichtleitenden Schicht aus Magnesiumoxid überzogen, die wie ein zur Entladungsstrecke in Reihe geschalteter Kondensator wirkt. So geschützt halten Elektroden und Leuchtstoffe länger. Dafür muß die Signalform der Ansteuerspannungen komplizierter sein. Die einmal aufgebaute Spannung am Kondensator kann sich aber beim nächsten Zündvorgang auf die Ansteuerspannung aufaddieren, so genügt hier eine wesentlich niedrigere Betriebsspannung, was die Treiber kostengünstiger macht. Wenn die Zündspannung weiter gesenkt werden könnte, würde die Treiberelektronik noch erheblich weniger kosten.

Aus der US 5,714,835 ist bereits ein fluoreszierendes Material fürBeleuchtungszwecke, das durch VUV molekular angeregte Xe₂-Excimer Strahlung anregbar ist, bekannt, das ein Wirtsgitter und wenigstens ein Dotierung umfaßt, wobei die Dotierung wenigstens einen Aktivator und Luminesces im sichtbaren Bereich des optischen Spektrums enthält, wobei für eine effiziente Anregung durch die Xe₂-Excimerstrahlung das fluoreszierende Material ein rotes fluoreszierendes Material R aus einem Mischborate der allgemeinen Formel (Yₓ,Gd_{y},Eu,)B₃, mit 0 ≤ x ≤ 0.99, 0 ≤ y ≤ 0.99, 0.01 ≤ z ≤ 0.2 und x + y + z = 1 ist, ein grün fluoreszierendes Material G aus einem Mischphosphat der allgemeinen Formel (LnₓCe_{y}Sc_{w}Tb_{z})PO₄ mit 0.35 ≤ x ≤ 0.95, 0 ≤ y ≤ 0.5, 0 ≤ w ≤ 0.2, 0.05 ≤ z≤ 0.5 und w + x + y + z = 1 ist, wobei Ln eines der Elemente La, Y oder Gd oder eine Mischung dieser Elemente ist und ein blau fluoreszierendes Material B aus einem Mischaluminat mit der allgemeinen Formel (Baₓ,Eu_{y})MgAl₂ₒO₁₇ mit 0.6 ≤ x ≤ 0.97, 0.03≤ y≤ 0.4 und x + y+ z = 1 ist und die Gewichtsanteile in der Mischung 0.2< R <0.5, 0.4<G<0.7, 0.05<B<0.15 und R + G + B =1 ist, umfasst, mit einer Schutzschicht auf dem fluoreszierenden Material, die MgF₂ umfaßt.

Weiterhin ist aus DATABASE WPI Section Ch, Week 197713 Derwent

Publications Ltd., London, GB; Class L03, AN 1977-22941YXP002153210 & JP 52 022580 A (FUJITSU LTD), 19. Februar 1977 (1977-02-19) ein beschichteter Leuchtstoff zur Verwendung in einem Plasmabildschirm mit einer Beschichtung, die aus einem Magnesiumoxid besteht, bekannt. Die Beschichtung des Leuchtstoffes wird durch Hydrolyse eines Metallalkoholates hergestellt.

Es ist eine Aufgabe der vorliegenden Erfindung, ein umweltfreundliches Verfahren zur Herstellung einer mit Magnesiumoxid beschichteten Leuchtstoffzubereitung für einen Plasmabildschirm zur Verfügung zu stellen.

Erfindungsgemäß wird die Aufgabe gelöst durch ein Verfahren zur Herstellung einer Leuchtstoffzubereitung aus einem Leuchtstoff mit einer Leuchtstoffbeschichtung mit mindestens einer Schicht, die Magnesiumoxid MgO enthält, aus einer Suspension des Leuchtstoffes in einer wässrigen Lösung mit pH 7, die ein wasserlösliches Magnesiumsalz enthält, durch homogene Präzipitation von Magnesiumoxid Mg(OH)₂ durch Erhöhung des pH-Wertes auf 9.5 und anschließende Kalzination des mit Mg(OH)₂ beschichteten Leuchtstoffs.

In einem Plasmabildschirm ist die Plasmaentladung nicht unabhängig von dem Leuchtstoff. Eine Leuchtstoffzubereitung, in der der Leuchtstoff mit einer Beschichtung aus Magnesiumoxid MgO versehen ist, erniedrigt die Zündspannung des Plasmas durch die hohe Sekundärelektronen-Emission und erlaubt es daher, eine kostengünstige Treiberelektronik für den Plasmabildschirm einzusetzen.

Überraschenderweise wurde gefunden, daß eine erfindungsgemäß hergestellte Beschichtung, die aus Magnesiumoxid MgO besteht, auch als stabilisierender Schutzüberzug wirkt, der die Abnahme der Effizienz von UV-Leuchtstoffen mit der Zeit unter UV-Anregung vermindert. Darüber hinaus hemmt die erfindungsgemäß hergestellte Beschichtung die Verschiebung des Farbpunktes unter UV-Anregung. Dadurch bleiben diese Plasmabildschirme lange Zeit hell und kontrastreich. Das Magnesiumoxid bildet eine harte, wasserunlösliche Beschichtung auf den Leuchtstoffpartikeln, es reagiert nicht mit den UV-Leuchtstoffen und wird selbst durch Strahlung nicht degradiert.

Da Magnesiumoxid selbst farblos ist, beeinflußt es auch nicht die Farbwerte der Leuchtstoffe. Die Beschichtung aus Magnesiumoxid MgO ist hydrophil, so daß sich die beschichteten Partikel leicht dispergieren lassen.

Das relativ geringe Löslichkeitsprodukt von Mg(OH)₂ (k_{L} = 1.2 x 10⁻¹¹) und die geringe Hydrolyseneigung von MgO trägt zur Stabilisierung der Leuchtsroffzubereitung bei, welche dadurch unempfindlich gegenüber wäßrigen Lösungen ist. Dies ist von großer Bedeutung, da bei der Herstellung von Bildschirmen und Lampen aus Umweltgründen zunehmend wasser-basierte Leuchtstoff-Suspensionen eingesetzt werden.

Es ist bevorzugt, daß der Leuchtstoff ein Vakuum-UV- Leuchtstoff ist.

Da amorphes MgO bei Wellenlängen kleiner 220nm bereits zu absorbieren anfängt und damit das von einem Xenon-Plasma ausgesandte Licht (überwiegend 172 nm bei höherem Xe-Partialdruck) selbst absorbiert, ist die Dicke der Beschichtung für die Lichtausbeute des beschichteten Leuchtstoffes entscheidend. Durch das neuartige, umweltfreundliche Verfahren zur homogenen Präzipitation von Mg(OH)₂ und dem anschließenden Kalzinierungsschritt zur vollständigen Dehydratisierung von Mg(OH)₂ zu MgO, wie im folgenden beschrieben, werden dichte und sehr dünne Beschichtungen mit einer Dicke zwischen 5 und 20 nm erhalten.

Nachfolgend wird die Erfindung anhand von einem Ausführungsbeispiel weiter erläutert. Die Leuchtstoffe, die gemäß der Erfindung mit einer stabilisierenden magnesiumoxidhaltigen Beschichtung versehen werden, unterliegen keiner Beschränkung. Verwendet werden können zum Beispiel die folgenden Leuchtstoffe:

LaPO₄:Ce, BaSi₂O₅:Pb, (Sr,Zn)₂MgSi₂O₇:Pb, Y₂SiO₅:Ce, BaMgAl₁ₒO₁₇:Eu, BaMgAl₁₄O₂₃:Eu, BaMgAl₁ₒ:Eu,Mn, Zn₂SiO₄:Mn, ZnGa₂O₄:Mn, BaAl₁₂O₁₉:Mn, LaPO₄:Ce,Tb, (Ce,Tb)MgAl₁₁O₁₉, (Ce,Gd,Tb)MgB₅O₁ₒ, Y₃(Al,Ga)₅O₁₂:Ce, Y₂O₃:Eu, (Y,Gd)₂O₃:Eu, Ba(Gd,Y)B₉O₁₆ :Eu, (Me1,Me2)BO₃:Eu mit Me1, Me2 = Y, Lu, Gd, In, La, Sc, Bi, Mg₄GeO_{5.5}F:Mn. Als blauer Leuchtstoff wird BaMgAl₁ₒO₁₇:Eu (BAM), als grüner Leuchtstoff (Sr,Zn)₂MgSi₂O₇:Pb (SMS) und als roter Leuchtstoff Y₂O₃:Eu (YOX) bevorzugt.

Die Partikel des Leuchtstoffes sind mit einer dünnen und gleichmäßigen Leuchtstoffbeschichtung überzogen, die aus Magnesiumoxid MgO besteht. Die Schichtdicke beträgt üblicherweise 5 bis 20 nm und ist damit so dünn, daß die UV-Absorption der Schicht vernachlässigt werden kann.

Die Beschichtung kann zusätzlich noch z. B. organische und anorganische Bindemittel wie Latex, Methylcellulose, Aluminiumphosphat oder SiO₂ enthalten, um die Möglichkeit chemischer Angriffe auf die Leuchtstoffpartikel einzuschränken.

Die Leuchtstoffzubereitung kann neben der Leuchtstoffbeschichtung aus Magnesiumoxid MgO auch noch weitere Beschichtungen, z. B. mit Pigmenten, die den Farbwert des Leuchtstoffes beeinflussen, umfassen. Als Ausgangsverbindung für die Beschichtung wird ein wasserlösliches Magnesiumsalz eingesetzt, insbesondere ein wasserlösliches Nitrat, Acetat oder Perchlorat.

Zur Herstellung der Beschichtungslösung werden ein oder mehrere dieser Magnesiumsalze in Wasser gelöst und der pH-Wert auf 7 eingestellt. In dieser Lösung wird der zu beschichtende Leuchtstoff dispergiert. Die so hergestellte wäßrige Leuchtstoffsuspension wird unter Rühren mit einer ammoniakhaltigen Atmosphäre in Kontakt gehalten, bis sich der pH-Wert der Suspension auf 9.5 erhöht hat und Mg(OH)₂ auf dem Leuchtstoffpartikeln ausgefällt wird. Der mit Mg(OH)₂ beschichtete Leuchtstoff wird abfiltriert, getrocknet und anschließend bei erhöhter Temperatur kalziniert, so daß sich Mg(OH)₂ in MgO umwandelt.

Durch dieses Verfahren wird eine mechanisch und chemisch sehr beständige Beschichtung aus Magnesiumoxid MgO erhalten, die fest an den Leuchtstoffpartikeln haftet.

Die so hergestellte Beschichtung hat üblicherweise eine Schichtdicke von 5 bis 20 nm und deckt die Leuchtstoffpartikel vollkommen ab.

Die Beschichtung ist hydrophil und ist gut kompatibel mit den üblichen Leuchtstoffbeschichtungen, so daß sie als Grundschicht für weitere Beschichtungen geeignet ist, die anschließend noch aufgebracht werden können, um die Pulvereigenschaften oder die Farbwerte des Leuchtstoffe zu verbessern.

Die Leuchtstoffzubereitung wird nach den bekannten Methoden auf den Plasmabildschirm aufgebracht.

### Ausführungsbeispiel

### a) SMS:MgO

1.0g Mg(NO₃)₂·6H₂O (3.9 mmol) werden in 50 ml Wasser gelöst. 8.0 g SMS werden in 50 ml Wasser suspendiert und anschließend wird zu dieser Suspension die Magnesiumnitrat-Lösung gegeben. Die erhaltene Suspension mit einem pH Wert von 7.5, die sich einem Einhalskolben befindet, wird kräftig gerührt. Anschließend wird der Einhalskolben über eine Schliffglasbrücke mit einem zweiten Einhalskolben verbunden, in dem sich eine konz. Ammoniaklösung befindet. Nach ca. zwei Stunden ist der pH-Wert der Suspension auf pH 9.1 angestiegen, so daß die Präzipitation von Mg(OH)₂ beginnt. Anschließend wird noch weiter gerührt, wobei der pH-Wert bis auf etwa pH 9.5 ansteigt. Dann wird der beschichtete Leuchtstoff abfiltriert, bei 80°C getrocknet und schließlich 2h bei 450°C kalziniert.

**Tabelle 1**

| Optische Eigenschaften von SMS und SMS:MgO | | | | |
|---|---|---|---|---|
| Leuchtstoff | λₘₐₓ [nm] | LE [lm/W] | QE₂₅₄ [%] | RQ₂₅₄ [%] |
| SMS | 365 | 15 | 89 | 8 |
| SMS:MgO | 365 | 15 | 91 | 9 |

### b) YOX:MgO

Der Beschichtungsprozess verläuft analog zum ersten Prozess. Plasmabildschirme mit dem beschichtetem Leuchtstoff zeigen eine deutlich niedrigere Zündspannung als Schirme, die mit unbeschichtetem YOX hergestellt wurden.

**Tabelle 2**

| Optische Eigenschaften von YOX und YOX:MgO | | | | |
|---|---|---|---|---|
| Leuchtstoff | λₘₐₓ [nm] | LE [lm/W] | QE₂₅₄ [%] | RQ₂₅₄ [%] |
| YOX | 611 | 288 | 88 | 15 |
| YOX:MgO | 611 | 288 | 88 | 17 |

### c) BAM:MgO

Der Beschichtungsprozess verläuft analog zum ersten Prozess. Plasmabildschirme mit dem beschichteten Leuchtstoff zeigen eine deutlich niedrigere Zündspannung als Schirme, die mit unbeschichtetem BAM hergestellt wurden.

**Tabelle 3:**

| Optische Eigenschaften von BAM und BAM:MgO | | | | |
|---|---|---|---|---|
| Leuchtstoff | λₘₐₓ [nm] | LE [lm/W] | QE₂₅₄ [%] | RQ₂₅₄ [%] |
| BAM | 450 | 90 | 90 | 8 |
| BAM:MgO | 450 | 91 | 96 | 9 |

Wie in dem Ausführungsbeispiel gezeigt, wird die Zündspannung bei dielektrisch behinderten Entladungen deutlich gesenkt und damit die Kosten für die Hochspannungselektronik. Überraschenderweise erhöhen Leuchtstoffbeschichtungen aus Magnesiumoxid MgO darüber hinaus die Reflexion des Phosphors im sichtbaren Spektralbereich und damit auch seine Quantenausbeute, so daß sie auch für Hg-Entladungslampen von großem Interesse sein können. Zudem tritt hier das Problem der UV Absorption durch die Leuchtstoffbeschichtungen aus Magnesiumoxid MgO nur vermindert auf (185 nm Linie).

## Patentansprüche

1. Verfahren zur Herstellung einer Leuchtstoffzubereitung aus einem Leuchtstoff mit einer Leuchtstoffbeschichtung mit mindestens einer Schicht, die Magnesiumoxid MgO enthält, aus einer Suspension des Leuchtstoffes in einer wässrigen Lösung mit pH 7, die ein wasserlösliches Magnesiumsalz enthält, durch homogene Präzipitation von Magnesiumoxid Mg(OH)₂ durch Erhöhung des pH-Wertes auf 9.5 und anschließende Kalzination des mit Mg(OH)₂ beschichteten Leuchtstoffs.

2. Verfahren gemäß Anspruch 1,
**dadurch gekennzeichnet,**
**dass** der Leuchtstoff ein Vakuum-UV-Leuchtstoff ist.

## Claims

1. A method of manufacturing a luminescent material composition comprising a luminescent material with at least one coating comprising magnesium oxide MgO from a suspension of the luminescent material in an aqueous solution having a pH of 7, comprising a water-soluble magnesium salt, by homogeneous precipitation of magnesium oxide Mg(OH)₂ by raising the pH-value to 9.5 and by subsequent calcination of the luminescent material coated with Mg(OH)₂.

2. A method as claimed in claim 1, **characterized in that** the luminescent material is a vacuum-UV luminescent material.

## Revendications

1. Procédé de fabrication d'une préparation d'une matière luminescente en une matière luminescente avec un revêtement de matière luminescente comportant au moins une couche qui contient de l'oxyde de magnésium MgO à partir d'une suspension de matière luminescente dans une solution aqueuse d'un pH 7 qui contient un sel de magnésium hydrosoluble par précipitation homogène d'oxyde de magnésium Mg(OH)₂ par augmentation du pH à 9,5 et calcination consécutive de la matière luminescente revêtue de Mg(OH)₂.

2. Procédé conformément à la revendication 1, **caractérisé en ce que** la matière luminescente est une matière luminescente aux UV sous vide.
